# EUROPEAN PATENT SPECIFICATION

(11) **EP 1 882 416 B1**
(45) Date of publication and mention of the grant of the patent: **13.12.2017**
(21) Application number: 06122068.7
(22) Date of filing: 11.10.2006
(51) Int. Cl.: A21B 1/24, A21B 1/48

(54) **Gas conveyor oven**
Gasbackofen mit Förderband
Four de cuisson à gaz avec transporteur

(30) Priority: 27.07.2006 IT PS20060024
(43) Date of publication of application: 30.01.2008
(73) Proprietor: Moretti Forni S.p.A., 61037 Mondolfo (PU) (IT)
(72) Inventor: Moretti, Marco, 61100, Pesaro (PU) (IT)
(74) Representative: Gustorf, Gerhard

(56) References cited:
- EP-A1- 1 442 660
- US-A- 4 576 090
- US-A- 4 753 215
- US-A- 5 180 898
- US-A- 5 231 920

## Description

The invention relates to conveyor ovens used to cook food for immediate consumption. They are professional instruments where foods to be cooked, generally pizzas, are placed on a conveyor belt that passes through a baking chamber. When the food exits the opposite end it is cooked and ready for immediate consumption.

The baking chambers of these conveyor food ovens are either heated electrically or by burners supplied by combustible fluids, normally natural gas or LPG, henceforth simply called "gas", in that it is basically void of combustion residue.

The more efficient models use the circulation of forced air system inside the baking chamber in order to cook the food faster and in a more uniform manner.

US 4 576 090 A which is the most relevant prior art document, discloses a gas conveyor oven. A similar conveyor oven with uniform air flow is known from US 5 231 920 A.

A baking chamber for electric conveyor ovens that uses the circulation of forced air is described in EP 1. 442.660 A1 in the name of Moretti Forni S.p.A.

This baking chamber has one ventilation source that is ducted to an upper and lower feeder, inside of which are electrical heaters that heat the air to the appropriate temperature, and is then discharged above and below the products passing along the conveyor belt. The air is then recovered and sent to the fan and into a forced air labyrinthian structure that keeps dispersive turbulence to a minimum.

The electrical heating system is particularly useful for operating this type of forced air system because the number and power of the electrical heating elements can be adjusted inside the feeders to differentiate the heat flows, particularly in sending more heat to the bottom feeder, which must cook the base of the pizza, and less to that directly above the toppings. The heating elements can also be easily adjusted to maintain the desired heat inside the baking chamber.

Conversely, in gas heated baking chambers, where we have just one burner and one fan, it is much more difficult to regulate the temperature and to obtain different properties in the upper and lower air flows in order to properly cook the product.

In other words, the electrical heating system in the baking chamber is much more flexible and adjustable. Heating by gas is subject to peaks and a lack of homogeneity, which is magnified by the "on-off" type of burner regulation.

### Purpose

In regard to that mentioned above, the main objective of the invention is hence to provide an innovative gas conveyor food oven with forced air circulation that, even with one burner and one fan, gives adjustability and a differential flow of cooking air that is essentially comparable to similar ovens with electric heating elements.

Another objective of the invention is to achieve the previously mentioned purpose through a simple and effective solution that is safe to use and is relatively inexpensive considering the results that can be obtained.

### Summary of the Solution

These as well as other objectives are all achieved with the gas conveyor oven for food, according to claim 1.

### Identification of the Attached Drawings

Further characteristics and advantages of the oven according to the invention are given in the detailed description that follows for a common model. This is only an example and is not limited to the three attached drawings, in which:
Figure 1 is a cross sectional drawing of the baking chamber of a gas conveyor oven according to the invention,
Figure 2 is a drawing with a partial cross section view from the top and
Figure 3 is a lengthwise cross section view from the rear.

### Static Description of the Given Example

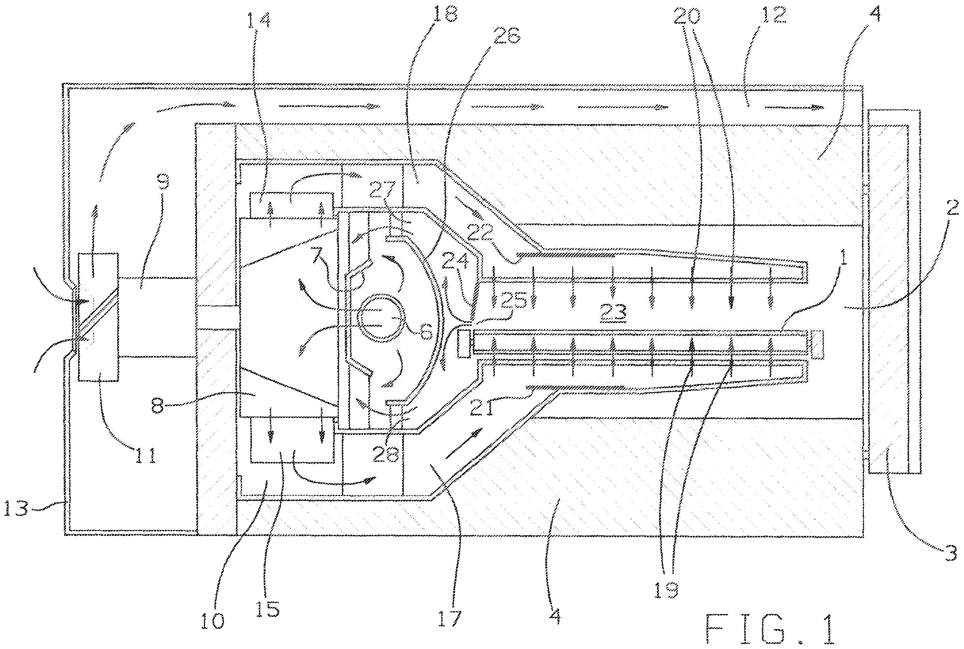

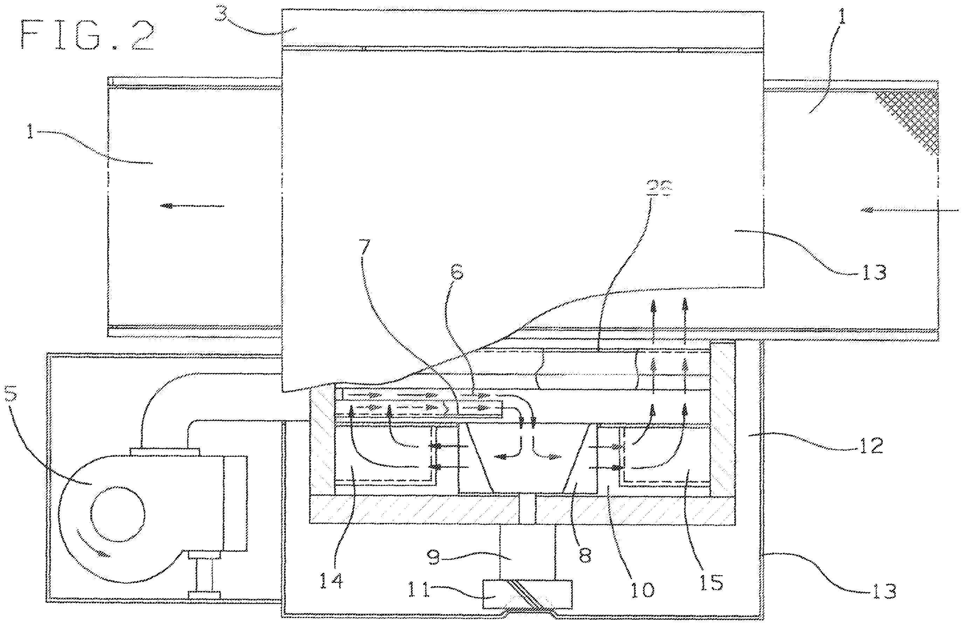

With reference to these figures, and especially to Figure 1, the number 1 represents a mesh conveyor belt that traverses a baking chamber 2 (also see figure 2), which can be inspected through a glass front door 3 and is insulated on all sides with thermal insulation material 4, stored in specific interspaces (indicated by the same number).

The heating of the baking chamber 2 is done by one gas burner 5 with a flame column 6 positioned parallel to the direction of movement of the conveyor 1, which is situated behind it and essentially on the same level.

The burner 5 is equipped with a continuous flame modulator, preferably composed of a gas supply valve connected to a Venturi air intake tube serving a variable speed electronically adjustable electric fan, for automatic regulation of the gas flow based on the incoming flow of air, adjusted by the variable speed fan and consequent mixing of the two fluids in order to optimize the stoichiometric combustion ratios.

Behind the flame column 6 of the burner 5, where the first section is protected by a partition 7, inside the baking chamber 2 and in a central position is the blower 8 for the forced air device. This is made up of a left rotating centrifugal fan (8) located on the opposite side of the baking chamber 2, which centrally draws in air from and evenly expels it peripherally into a ventilation chamber 10 along the length of the baking chamber 2.

The motor 9 for the blower 8 is located in the rear, outside the ventilation chamber 10, and operates another external coaxial centrifugal fan 11 that is used to circulate forced air outside the baking chamber 2 and inside a peripheral space 12 delimited by a sheet metal covering 13 in order to keep it at the proper temperature so that the outside of the oven can be touched without the risk of getting burnt.

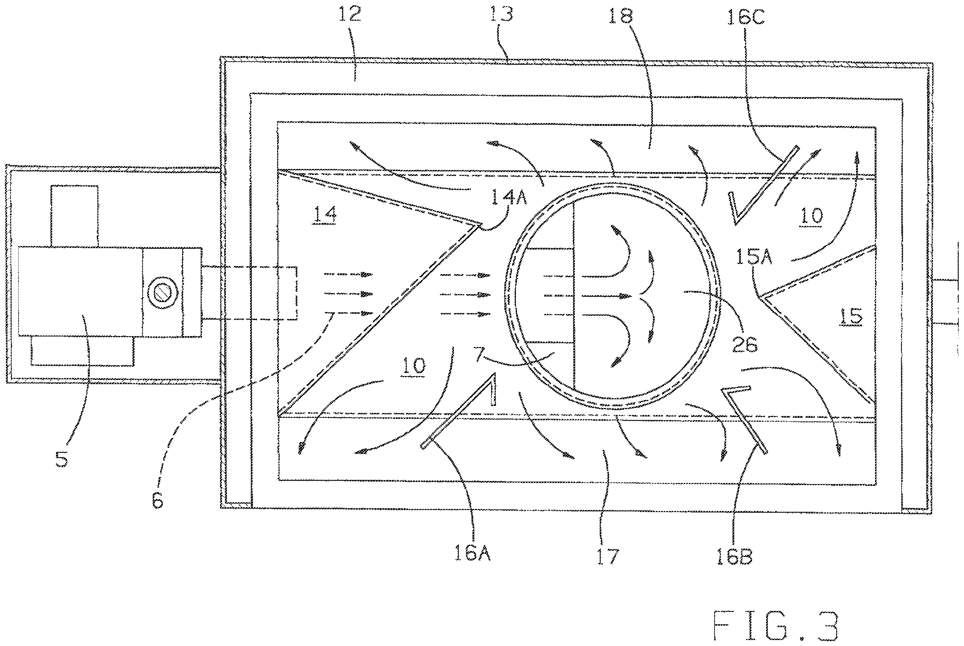

Two angular cusps 14 and 15 (see Figure 3) are located on the vertical sides of the ventilation chamber 10. The left cusp 14, with reference to the counter-clockwise rotation of the fan 8 mounted above it, has its apex 14A higher than the horizontal diameter of the fan 8, while the apex of the right cusp 15A is axial with respect to the horizontal diameter of this same fan 8.

There are also three radial deflectors 16A, 16B and 16C inside the ventilation chamber 10; one deflector 16A is positioned below the left angular cusp 14 and the other two, 16B and 16C, are below and above the right angular cusp 15 respectively.

A lower 17 and an upper feeder 18 are leading out of the ventilation chamber 10, which each have their respective openings along the entire length of the ventilation chamber 10 (see Figure 3), where the size of the opening for the lower feeder 17 is greater than that for the upper feeder 18 for the reasons explained later (see Figure 1).

The lower 17 and upper feeders 18, extend diagonally into the baking chamber 2, above and below the mesh conveyor belt 1 respectively (see Figure 1), along its entire length inside the baking chamber 2, into which they are leading by means of their respective diffusers 19 and 20 made of specially drawn lower 19 and upper calibrated holes 20.

There are lower 21 and upper splitters 22 on the lower and upper feeders, 17 and 18 respectively.

The transport canal 23 for the food being cooked, composed of the conveyor belt 1 and the upper diffusers 20, is partially closed at the rear of the relative extension by a deflector 24 that has a lower opening 25 that runs along the length of the deflector.

Behind this is the convex face of a curved partition 26 that runs parallel of the flame column 6 over its entire length, leaving an upper and lower gap, 27 and 28 respectively.

Inside the baking chamber 2, and preferably located in the upper output feeder 18, are electronic temperature sensors which are connected to the electric fan for the continuous flame supply modulator of the burner 5, for the functions described below.

### Dynamic Description of the Given Example

After providing a static description of a preferred oven, a dynamic or functional description will now be given:
The flame column 6 of the burner 5 enters the baking chamber 2 and heats the air that is centrally drawn up by the fan 8. The air is then expelled peripherally by the counter-clockwise rotation of the fan.

The outcoming hot air is intercepted by the left 14 and right angular cusps 15, with apexes 14A and 15A respectively located above and alongside the horizontal level of the fan 8. In relation to the rotation of the fan, the hot air is shaped and oriented/levelled, which is magnified by the deflectors 16A, 16B and 16C that split the current into two air flows that are channelled into the lower 17 and upper feeders 18. The air that is directed downwards has a higher flow rate, which is appropriate for the larger dimension lower feeder 17.

In this manner, through the lower 17 and upper feeders 18, the flow of hot air reaches the diffusers 19 and 20, crosses them and is forced above and below the mesh conveyor belt 2 carrying the pizzas. The increased flow to the lower feeder achieves the effect of giving more heat to the base of the food product while at the same time cooking the toppings properly, whichever they may be.

After carrying out the cooking function, the flow of air coming from the diffusers 19 and 20 is then centrally drawn into the canal 23 and passes through the opening 25 below the deflector 24 located at the end of this canal and hits the curved partition 26. The air is then split and channelled through the upper 27 and lower gaps 28 of the curved partition, thus returning to the flame column 6 to be reheated and to restart the forced air cycle.

Even with just one burner and one blower, this labyrinthian structure has demonstrated that it can achieve the uniform and optimal cooking of pizzas by directing the heat where it is needed, whereas the proper temperature can be maintained without shutting off the flame 6. The intensity of the flame is instead modulated by adjusting the parameters to achieve the optimum mixture of combustible gas and air, thus resulting in a savings in gas with respect to the normal waste of the "on-off" systems, while offering uniform cooking.

In particular the optimum configuration foresees temperature sensors located in the upper feeder 18, where the forced air is at its maximum temperature. The temperature is electronically controlled based on the preset optimization parameters as is the regulation of the variable speed electric fan serving a Venturi air intake tube connected to the gas supply valve of the continuous flame supply modulator of the burner 5. This valve increases or decreases the supply of combustible gas based on the detected temperature, and therefore increases or decreases the burner 5 flame that is always on. The set temperature is thus maintained by constantly optimizing the stoichiometric ratio for the air-gas mixture. The structure of the ventilation chamber can be modified to change the running direction of the blower to thus obtain a more sustained flow in the lower duct with respect the upper duct, maintaining the concept described above and asserted below.

### Advantages of the Invention

As it is clear from the detailed description given above of a preferred example of execution, the gas conveyor oven presented here offers the advantages that meet the preset object as well as others. It includes a functional solution to make the gas conveyor food ovens with one burner and one blower more efficient and adjustable.

## Claims

1. Gas conveyor oven for food, comprising:
- a baking chamber (2) provided with a conveyor belt (1);
- one burner (5) fed by gas with a flame column (6) oriented parallel to the direction of movement of said conveyor belt (1) located behind and essentially on the same level as said conveyor belt (1) inside the baking chamber (2);
- a continuous flame supply modulator for the burner (5);
- deflectors (14, 15, 16) for the preferential differentiated channelling of hot air flows inside a forced air labyrinthian structure (17, 18, 19, 20) and selective shielding of the return air flow over the flame column (6) of the burner (5) for reheating;
- a centrifugal fan (8) that is centrally located behind the flame column (6) of the burner (5) which draws in air from the baking chamber (2) and expels it peripherally inside a ventilation chamber (10);
- a lower feeder (17) and an upper feeder (18) both exiting the ventilation chamber (10), wherein the size of the opening for the lower feeder (17) is greater than that for the upper feeder (18), both feeders extending diagonally into the baking chamber (2), above and below the mesh conveyor belt (1) and along its entire length inside the baking chamber (2);
- a curved partition (26) located parallel to the flame column (6), blocking a rear portion of a transport canal (23) of the food being cooked, said canal (23) being defined by the conveyor belt (1) and the upper feeder (18);
wherein
- the deflectors are in the form of two angular cusps (14, 15) that define and reduce the volume of the vertical sides of the ventilation chamber (10);
and wherein
- said centrifugal fan (8) is located on the opposite side of the baking chamber (2) and
- has a counter-clockwise rotation wherein the left angular cusp (14), with reference to the counter-clockwise rotation of the fan (8), has an apex (14A) situated above the horizontal diameter of the fan (8), while the apex (15A) of the right angular cusp (15) is axial to the horizontal diameter of the fan (8);
- or wherein the centrifugal fan (8) has a clockwise rotation wherein the left angular cusp (14), with reference to the clockwise rotation of the fan (8), has an apex (14A) situated below the horizontal diameter of the fan (8), while the apex (15A) of the right angular cusp (15) is axial to the horizontal diameter of the fan (8).

2. Gas conveyor oven according to clam 1, **characterized by** the presence of three radial deflectors (16A, 16B, 16C) inside the ventilation chamber (10),
- wherein, in the case of a counter-clockwise rotation of the fan (8), one deflector (16A) is positioned below the left angular cusp (14) and the other two deflectors (16B and 16C) below and above the right angular cusp (15), respectively,
- whereas, in the case of a clockwise rotation of the fan (8), one deflector (16A) is positioned below the right angular cusp (15) and the other two deflectors (16B and 16C) are below and above the left angular cusp (14), respectively.

3. Gas conveyor oven according to claim 1 or 2, **characterized by** the fact that the lower feeder (17) and the upper feeder (18) both leading out of the ventilation chamber (10) with each having their respective openings along the entire length of the ventilation chamber (10), the size of the opening for the lower feeder (17) being greater than that of the upper feeder (18).

## Patentansprüche

1. Gasbackofen für Lebensmittel, umfassend:
- einen Backraum (2) mit einem Förderband (1),
- einen Brenner (5), dem Gas zur Erzeugung einer Flammensäule (6) zugeführt wird, die parallel zur Vorschubrichtung des Förderbandes (1) ausgerichtet ist und innerhalb des Backraums (2) hinter dem Förderband (1) und im wesentlichen auf derselben Höhe wie dieses liegt,
- einen Modulator für die kontinuierliche Flammenversorgung des Brenners (5),
- Ablenkorgane (14, 15, 16) für die bevorzugte, differenzierte Kanalisierung der Heißluftströme innerhalb einer Labyrinthstruktur (17, 18, 19, 20) für die Zwangsluftströmung und die selektive Abschirmung der Rückströmluft über der Flammensäule (6) des Brenners (5) zur Wiedererhitzung,
- ein Zentrifugalgebläse (8), das mittig hinter der Flammensäule (6) des Brenners (5) angeordnet ist und Luft aus dem Backraum (2) absaugt und dann peripherisch in eine Belüftungskammer (10) leitet,
- eine untere Zuführung (17) und eine obere Zuführung (18), die beide von der Belüftungskammer (10) ausgehen, wobei die Mündungsöffnung der unteren Zuführung (17) größer als diejenige der oberen Zuführung (18) ist, die sich beide über und unter dem Maschennetz-Förderband (1) und über dessen gesamte Länge diagonal in den Backraum (2) erstrecken,
- ein bogenförmiges Schott (26), das sich parallel zu der Flammensäule (6) erstreckt und einen hinteren Abschnitt eines Förderkanals (23) für das Backgut abschließt, wobei dieser Förderkanal (23) durch das Förderband (1) und die obere Zuführung (18) definiert ist,
wobei vorgesehen ist, dass
- die Ablenkorgane als zwei winkelförmige Ecken (14, 15) ausgebildet sind, welche das Volumen der Belüftungskammer (10) an den vertikalen Seiten definieren und einschränken,
- das Zentrifugalgebläse (8) auf der gegenüberliegenden Seite des Backraums (2) angeordnet ist und eine Drehrichtung im Gegenuhrzeigersinn hat,
- wobei die bezüglich der Drehrichtung des Gebläses (8) linke Ecke (14) mit ihrem Scheitel (14A) oberhalb des horizontalen Durchmessers des Gebläses (8) liegt, während der Scheitel (15A) der rechten Ecke (15) axial zu dem horizontalen Durchmesser des Gebläses (8) verläuft,
- während bei einer Drehrichtung des Gebläses (8) im Uhrzeigersinn die linke Ecke (14) mit ihrem Scheitel (14A) unterhalb des horizontalen Durchmessers des Gebläses (8) liegt und der Scheitel (15A) der rechten Ecke (15) axial zu dem horizontalen Durchmesser des Gebläses (8) ausgerichtet ist.

2. Gasbackofen nach Anspruch 1, **dadurch gekennzeichnet, dass** drei radiale Ablenkorgane (16A, 16B, 16C) in der Belüftungskammer (10) vorgesehen sind,
- wobei bei einer Drehrichtung des Gebläses (8) im Gegenuhrzeigersinn ein Ablenkorgan (16A) unterhalb der linken Ecke (14) und die anderen beiden Ablenkorgane (16B, 16C) unterhalb bzw. oberhalb der rechten Ecke (15) liegen,
- während bei einer Drehrichtung des Gebläses (8) im Uhrzeigersinn ein Ablenkorgan (16A) unterhalb der rechten Ecke (15) und die anderen beiden Ablenkorgane (16B, 16C) unterhalb bzw. oberhalb der linken Ecke (14) liegen.

3. Gasbackofen nach Anspruch 1 oder 2, **dadurch gekennzeichnet, dass** die untere Zuführung (17) und die obere Zuführung (18) aus der Belüftungskammer (10) herausführen, wobei sich ihre entsprechenden Mündungsöffnungen über die gesamte Länge der Belüftungskammer (10) erstrecken und die Mündungsöffnung der unteren Zuführung (17) größer ist als diejeniger der oberen Zuführung (18).

## Revendications

1. Four de cuisson pour aliments, comprenant :
- un espace de cuisson (2) avec une bande de transport (1),
- un brûleur (5) qui reçoit le gaz pour produire une colonne de flamme (6) orientée parallèlement à la direction d'avance de la bande de transport (1) et placée à l'intérieur de l'espace de cuisson (2) derrière la bande de transport (1) et essentiellement à la même hauteur que celle-ci.
- un modulateur pour l'alimentation continuelle du brûleur (5),
- des organes de déflexion (14, 15, 16) pour la canalisation différenciée préférée des flux d'air chaud à l'intérieur de la stucture enlabyrinthe (17, 18, 19, 20) pour la ventilation d'air forcé et pour la protection sélective de la colonne de flamme (6) du brûleur (5) du courant de retour de réchauffement,
- un ventilateur centrifuge (8) positionné au centre derrière la colonne de flamme (6) du brûleur (5) et qui aspire l'air de l'espace de cuisson (2) et le dirige en périphérie dans une chambre de ventilation (10),
- un canal d'alimentation inférieur (17) et un canal d'alimentation supérieur (18) partant tous les deux de la chambre de ventilation (10), la sortie du canal d'alimentation inférieur (17) étant plus grande que celle du canal d'alimentation supérieur (18), qui s'étendent au-dessus et au-dessous de la bande à mailles de transport (1) et diagonalement sur toute leur longueur dans l'espace de cuisson (2),
- une cloison étanche arquée (26) qui s'étend parallèlement à la colonne de flamme (6) et ferme la partie postérieure du canal de transport (23) pour le produit à cuire, ledit canal de transport (23) étant défini par la bande de transport (1) et le canal d'alimentation supérieur (18), étant prévu que
- les organes de déflexion ont la forme de deux éléments angulaires (14, 15) qui définissent et limitent le volume de la chambre de ventilation (10) sur ses côtés verticaux,
- le ventilateur centrifuge (8) est positionné sur le côté opposé à l'espace de cuisson (2) et tourne en sens inverse des aguilles d'une montre,
- le sommet (14A) de l'élément angulaire (14), à gauche par rapport au sens de rotation du ventilateur centrifuge (8), se trouve au-dessus du diamètre horizontal du ventilateur centrifuge (8), tandis que le sommet (15A) de l'élément angulaire droit (15) s'étend dans le sens axial du diamètre horizontal du ventilateur centrifuge (8),
- tandis que le sommet (14A) de l'élément angulaire gauche (14) par rapport au sens de rotation des aiguilles d'une montre du ventilateur centrifuge (8), se trouve au-dessous du diamètre horizontal du ventilateur centrifuge (8), le sommet (15A) de l'élément angulaire (15) s'étendant dans le sens axial relativement au diamètre horizontal du ventilateur centrifuge (8).

2. Four de cuisson à gaz selon la revendication 1 **caractérisé par le fait que** dans la chambre de ventilation (10) se trouvent trois éléments de déflexion (16A, 16B, 16C),
- dans le cas du sens de rotation inverse des aiguilles d'une montre du ventilateur centrifuge (8), un élément de déflexion (16A) se trouve au-dessous de l'élément angulaire gauche (14) et les deux autres éléments angulaires (16B, 16C) se trouvent au-dessous ou au-dessus de l'élément angulaire droit (15),
- tandis que dans le cas du sens de rotation des aiguilles d'une montre du ventilateur centrifuge (8), un élément de déflexion (16A) se trouve au-dessous de l'élément angulaire droit (15) et les deux autres éléments angulaires (16B, 16C) se trouvent au-dessous ou au-dessus de l'élément angulaire gauche (14).

3. Four de cuisson à gaz selon la revendication 1 ou 2 **caractérisé par le fait que** le canal d'alimentation inférieur (17) et le canal d'alimentation supérieur (18) sortent de la chambre de ventilation (10) dont les sorties s'étendent sur toute la longueur de la chambre de ventilation (10), la sortie du canal d'alimentation inférieur (17) étant plus grande que celle du canal d'alimention supérieur (18).
